# EUROPEAN PATENT SPECIFICATION

(11) **EP 3 871 866 B1**
(45) Date of publication and mention of the grant of the patent: **21.06.2023**
(21) Application number: 20305203.0
(22) Date of filing: 28.02.2020
(51) Int. Cl.: B29D 11/00, G02C 7/12, B32B 23/20, B32B 27/30, B32B 23/08

(54) **PRIMER COATING COMPOSITION FOR POLARIZING OPHTHALMIC LENS**
GRUNDIERBESCHICHTUNGSZUSAMMENSETZUNG FÜR POLARISIERENDES BRILLENGLAS
COMPOSITION DE REVÊTEMENT D'APPRÊT DE POLARISATION DE LENTILLE OPHTALMIQUE

(43) Date of publication of application: 01.09.2021
(73) Proprietor: ESSILOR INTERNATIONAL, 94220 Charenton-Le-Pont (FR)
(72) Inventor: JIANG, Peiqi, DALLAS, TEXAS 75234 (US); BERZON, Ronald A., DALLAS, TX Texas 75234 (US)
(74) Representative: Plasseraud IP

(56) References cited:
- EP-A1- 3 539 760
- US-A1- 2019 219 735

## Description

### BACKGROUND

The present disclosure relates to a functionalized optical article.

A functional layer is often provided on the surface of an ophthalmic lens to provide desirable properties to the lens. For example, a polarizing filter may be applied on sunglass lenses to block glare and reduce overall transmittance of light through the lenses. A photochromic filter may also be applied on ophthalmic lenses so that the lenses darken when exposed to certain light, such as ultraviolet (UV). In addition, when a clear-to-polarized filter is applied on ophthalmic lenses, the polarization properties of the lenses will change when the lenses are exposed to, e.g., outdoor light. Those functional layers are typically thin, and thus laminated between triacetyl cellulose (TAC) films in order to provide support for those layers. A TAC film has been widely used in sunglass lens applications thanks to its excellent optical and mechanical properties to form a laminate of a functional layer and a TAC film (a TAC laminate).

In order to increase adhesion of a TAC film or a TAC laminate to lenses, a primer coating may be pre-applied onto the surface of a TAC film or a TAC laminate prior to lens casting. For example, KR993596 B1 describes a primer coating for improving adhesion between a TAC film and a cast CR-39 plastic lens in which a TAC laminate is embedded. WO2019175354A1 describes a primer coating for improving adhesion between a TAC film and a cast CR-39 plastic lens in which a TAC laminate is embedded. US2019/0219735 describes a primer composition to be coated on TAC laminates prior to being embedded in a cast CR-39 plastic lens. WO2019/175354 A1 and EP3515995 describe a primer coating for preparing a cast CR-39 lens in which a TAC laminate is embedded. To prepare a CR-39 lens with an embedded TAC laminate, a TAC laminate having a primer coating deposited on the lens-contacting surface of the laminate is placed within a CR-39 monomer so that both surfaces of the TAC polarizing laminate are contacting the CR-39 monomer. The CR-39 monomer is polymerized to provide a solid polarizing lens where the polarizing function is provided by the TAC polarizing laminate embedded inside the lens.

However, the primer coatings described in these previous documents do not provide desirable adhesion for different lenses, such as polyurethane (PU) lenses and poly(thio)urethane lenses. High-index or ultra-high-index (UHI) lenses for ophthalmic lenses, in particular sunglasses, are often made from poly(thio)urethane and used in manufacturing premium polarized sunglasses.

It is desired to manufacture a poly(thio)urethane lens, such as an ultra-high-index UHI Mitsui MR-7^{®} lens with polarizing functions where a TAC polarizing laminate is positioned and cast on top of the poly(thio)urethane lens. It is particularly desired to manufacture a poly(thio)urethane UHI lens to which a TAC film or a TAC laminate is attached on the front (top) surface (TAC-on-TOP) of the UHI lens, and not internally, which is typically done. In a TAC-on-TOP lens, there is only one adhesion interface to a TAC film or a TAC laminate to a UHI lens. Since TAC itself may not have sufficient adhesion to a UHI lens, a primer coating may be required to adhere a TAC film or a TAC laminate to a UHI lens. The primer coating, when cured, should have a sufficiently low haze, to manufacture ophthalmic lenses. There is a need to develop a new primer coating composition for casting UHI lenses with a TAC film or a TAC laminate that provides both good adhesion and an acceptable haze level.

Another need is to improve adhesion of components within a TAC laminate when using a reactive adhesive such as a two-composition (2K) polyurethane (PU) adhesive. The adhesion of a reactive adhesive (2K PU, for example) on bare TAC is sometimes low or inconsistent, and therefore there is a need to improve the laminate's internal adhesion when a reactive 2K polyurethane adhesive is used.

### SUMMARY

The invention is defined by the claims.

One aspect of the present embodiments is related to a primer coating composition suitable for bonding a cast-polymerized lens and a functional laminate. The primer coating composition includes at least one acrylic polymer; at least one urethane acrylate oligomer; at least one reactive component comprising at least one selected from the group consisting of 2-hydroxyethylmethacrylate (HEMA), allyl methacrylate (AMA), 2-hydroxy-1,3-di(meth)acryloxy propane, 2-hydroxypropylmethacrylate (HPMA), dimethylaminoethylmethacrylate (DMAEM), diethylaminoethylmethacrylate (DEAEM), pentaerythritol tetrakis(3-mercaptopropionate), 2,3-bis[(2-mercaptoethyl)thio]-1-propanethiol, 2-mercaptoethyl sulfide, poly(ethylene glycol) dithiol, 2,2'-(Ethylenedioxy)diethanethiol, ethylene glycol bis-mercaptoacetate and pentaerythritol; at least one UV initiator or at least one thermal initiator; and at least one solvent. The acrylic polymer may have a molecular weight ranging from about 1,000 to about 100,000 g/mol. The urethane acrylate oligomer may include an ethylenically unsaturated monomer having a degree of unsaturation of 1 or more. The reactive component may have a functionality of at least 2. The reactive component may have at least two reactive groups of allyl, vinyl, (meth)acrylate, thiol, hydroxyl, isocyanate, epoxy, episulfide, amine, and/or imine, or any combination thereof. The reactive component may have a (meth)acrylate group and at least one functional group of allyl, vinyl, thiol, hydroxyl, isocyanate, epoxy, episulfide, amine, and/or imine or any combination thereof. The reactive component more preferably be 2-hydroxyethylmethacrylate or pentaerythritol tetrakis(3-mercaptopropionate). The solvent may include a ketone solvent and/or an acetate solvent. The functional laminate may have a functional layer and a thermoplastic film layer including at least one of polycarbonate (PC), polymethyl methacrylate (PMMA), polyamide (nylon), polyester (PET), cellulose acetate butyrate (CAB), and triacetyl cellulose (TAC). The functional laminate may be a TAC-PVA-TAC laminate. The PVA film in the TAC-PVA-TAC laminate may have polarizing properties.

Another aspect of the present embodiments is related to a method for cast-polymerizing a lens. The method includes: applying the primer coating composition described above to at least one external surface of a functional laminate; cutting and forming the primer coated functional laminate, placing the shaped primer coated functional laminate into an optical casting cell and filling the casting cell with a lens-casting monomer formulation, and curing the lens-casting monomer formulation. The functional laminate may have a functional layer and a thermoplastic film layer, where the thermoplastic film layer may include at least one of polycarbonate (PC), polymethyl methacrylate (PMMA), polyamide (nylon), polyester (PET), cellulose acetate butyrate (CAB), and triacetyl cellulose (TAC). The functional laminate may be a TAC-PVA-TAC laminate. The PVA film in the TAC-PVA-TAC laminate may have polarizing properties. The casting lens-casting monomer formulation may include a (thio)urethane monomer formulation. The invention is defined by the claims.

Another aspect of the present embodiments is related to an ophthalmic lens. The ophthalmic lens includes: a lens comprising of at least one polymer; a functional laminate including a functional layer and a thermoplastic film layer where the thermoplastic layer is attached to at least one side of the functional layer; and a primer coating deposited on at least one external surface of a laminate. The primer coating may be obtained by curing the primer coating composition described above. The functional laminate may be on a surface of the cast-polymerized lens or resides embedded within the cast-polymerized lens. The dried and cured primer coating may have a thickness ranging from about 0.5 µm to about 30 µm. The invention is defined by the claims.

### DETAILED DESCRIPTION OF THE EMBODIMENTS

Various embodiments of the present disclosure will now be described below.

A first embodiment is related to a primer coating composition suitable for bonding a cast-polymerized lens and a functional laminate. The invention is defined by the claims.

The cast-polymerized lens may include at least one polymer, and may be obtained by cast-polymerizing at least one casting monomer formulation. A casting monomer formulation for forming the lens may be referred herein as "lens-casting monomer." The lens may be a polyurethane lens obtained by polymerizing at least one urethane lens-casting monomer, or poly(thio)urethane lens obtained by polymerizing at least one thiourethane lens-casting monomer. For example, a poly(thio)urethane lens such as a MR-7^{®} lens having a refractive index of about 1.67, maybe produced by polymerizing MR-7A^{®} (di-isocyante) and MR-7B^{®} (tri-thiol). The poly(thio)urethane lens may be a high refractive index lens (1.60) or an ultra-high refractive index lens (1.67). Poly(thio)urethane lenses often have an ultra-high index and may be preferably used in producing premium eyeglasses.

The functional laminate is a laminate that is capable of providing certain functionalities or properties to the lens. For example, a polarized lens, an electrochromic lens, a photochromic lens, and a clear-to-polarized lens, color enhancement lens, a selective wavelength lens (narrow and broad), may be manufactured by attaching a functional laminate having these properties to a lens. The functional laminate may be attached to one surface of the lens, two surfaces of the lens, or embedded in the lens or any combination thereof.

The functional laminate may include a functional film layer and a thermoplastic film layer. The functional film layer may be a layer having certain functionalities or properties, such as a polarizing film and a photochromic film. The thermoplastic film layer may provide certain other functionalities or properties such as blue blocking, ultraviolet light blocking or infrared light blocking. The thermoplastic film layer may be included in the functional laminate as a support of the functional layer. The thermoplastic film layer may be made of, for example, polycarbonate (PC), polymethyl methacrylate (PMMA), polyamide (nylon), polyester (PET), cellulose acetate butyrate (CAB), triacetyl cellulose (TAC), and combinations thereof.

The functional laminate having polarization properties may be manufactured using a thin polyvinyl alcohol (PVA) polarizing film. For example, the PVA polarizing film may have a thickness of about 0.03 to 0.08 mm. To manufacture a lens including a PVA polarizing film, the PVA polarizing film may be subjected to several handling steps, including thermoforming, cutting to a desired diameter, primer application, and fitting into a casting cell. The fragile nature of a thin PVA polarizing film coupled with these multiple processing steps may increase the potential for film damage. As such, polarizing PVA films may be laminated between triacetyl cellulose (TAC) films in order to provide robust protective support layers over the PVA film surfaces. A functional laminate including a PVA functional film laminated between TAC thermoplastic films may be referred to as a TAC-PVA-TAC laminate.

A polarized lens may be manufactured by attaching a functional laminate having polarization properties on at least one surface of a lens, or embedding the functional laminate in a lens.

Ophthalmic lenses having different properties or functions may be manufactured by combining different lens types and functional laminates. In one embodiment, the lens is a poly(thio)urethane lens and the functional laminate is a polarizing laminate, in particular a TAC-PVA-TAC laminate.

The primer coating composition used in the present embodiment may be used to improve adhesion between the lens and the functional laminate. The primer coating composition includes at least one acrylic polymer, at least one urethane acrylate oligomer, at least one reactive component, at least one UV initiator or at least one thermal initiator, and at least one solvent.

The acrylic polymer may be any acrylic polymer. In one embodiment, the acrylic polymer has a molecular weight ranging from about 1,000 to about 100,000 g/mol.

The urethane acrylate oligomer may be any urethane acrylate oligomer. In one embodiment, the urethane acrylate oligomer has an ethylenically unsaturated monomer having a degree of unsaturation of 1 or more.

The reactive component may be any component that is capable of reacting with a lens-casting monomer. The reactive component may be a monomer, an oligomer, or in some instances a polymer.

The reactive component may have at least one functional group capable of reacting with the lens-casting monomer. In one embodiment, the lens-casting monomer may be a (thio)urethane monomer formulation. In another embodiment, the lens-casting monomer may be a urethane monomer formulation. Examples of a functional group capable of reacting with a (thio)urethane monomer formulation include, but are not limited to, allyl, vinyl, (meth)acrylate, thiol, hydroxyl, isocyanate, epoxy, episulfide, amine, imine, and any combinations thereof. As used herein, "(meth)acrylate" means acrylate, methacrylate, or a mixture thereof.

The reactive component may have at least one functional group capable of reacting with the urethane acrylate oligomer described above. Examples of a functional group capable of reacting with the urethane acrylate oligomer include, but are not limited to, allyl, vinyl, (meth)acrylate, thiol, and any combinations thereof. Although not limited in any way, it is considered that the reactive component having these functional groups reacts with the urethane acrylate oligomer in the primer coating composition and provides connectivity of the reactive group to the TAC film surface as applied and UV- or thermo-cured.

In one embodiment, the reactive component has a functionality of at least 2. The reactive component may have at least one functional group capable of reacting with a lens-casting monomer and at least one functional group capable of reacting with the urethane acrylate oligomer. These functional groups may be the same or different.

In one embodiment, the reactive component may have a (meth)acrylate group and at least one functional group other than the (meth)acrylate group. The functional group other than the (meth)acrylate group may be allyl, vinyl, thiol, hydroxyl, isocyanate, epoxy, episulfide, amine, imine and combinations thereof.

Examples of the reactive component include 2-hydroxyethylmethacrylate (HEMA), allyl methacrylate (AMA), 2-hydroxy-1,3-di(meth)acryloxy propane, 2-hydroxypropylmethacrylate (HPMA), dimethylaminoethylmethacrylate (DMAEM), diethylaminoethylmethacrylate (DEAEM), pentaerythritol tetrakis(3-mercaptopropionate), 2,3-bis[(2-mercaptoethyl)thio]-1-propanethiol, 2-mercaptoethyl sulfide, poly(ethylene glycol) dithiol, 2,2'-(Ethylenedioxy)diethanethiol, ethylene glycol bis-mercaptoacetate and pentaerythritol.

In one preferred embodiment, the reactive component includes HEMA. This monomer has one acrylate group and one hydroxyl group. Although not limited in any way, it is considered that the acrylate group in HEMA can first react with the urethane acrylate oligomer in the primer coating composition, and exhibits good adhesion on the TAC film surface. The hydroxy (-OH) group, which does not react during the UV cure, may remain available to react with a lens-casting monomer during lens casting. For example, the hydroxyl group may react with an isocyanate monomer (MR-7A^{®}: *m*-xylylene diisocyanate) in a thiourethane lens-casting monomer during lens casting to manufacture a poly(thio)urethane lens and build good adhesion to the lens surface.

Another example of the reactive component in a preferred embodiment is pentaerythritol tetrakis(3-mercaptopropionate). This monomer contains four thiol groups. Although not limited in any way, it is considered that at least one thiol group can first react with the urethane acrylate oligomer in the primer coating composition by the well-known thiolene reaction, and exhibits good adhesion on the TAC film surface. The other thiol groups, which did not react during the UV cure, may remain available to react with a lens-casting monomer during lens casting. For example, the other thiol groups may react with an isocyanate monomer (MR-7A^{®}: *m*-xylylene diisocyanate) in a thiourethane lens-casting monomer during lens casting to manufacture a poly(thio)urethane lens and build good adhesion to the lens surface.

In a preferred embodiment, the reactive component may have a first functional group capable of reacting with the urethane acrylate oligomer and a second functional group capable of reacting with the thiol or isocyanate monomer in the lens-casting monomer, such as a thiourethane mixture. A primer coating composition including such reactive component may be desirably used in manufacturing a poly(thio)urethane lens with a functional laminate including a TAC film, such as a TAC-PVA-TAC laminate.

In another aspect of the present embodiment, the reactive component may be an oligomer or a polymer. Depending upon the functional group types, the oligomer or polymer may not chemically react with the urethane acrylate oligomer, but instead may physically interact with the urethane acrylate oligomer by chemical affinity and entanglement. The oligomer or polymer may react with the isocyanate or thiol monomer in the thio-urethane lens-casting monomer during lens casting to build good adhesion to the lens surface.

An example of the entangled polymer is poly-2-hydroxyethymethacrylate. This polymer contains many hydroxyl groups. Although not limited in any way, it is considered that the polymer resides within the primer coating composition and there is no reactivity during the UV curing. The hydroxyl groups, which do not react during the UV cure, remain available to react with a lens-casting monomer during lens casting. For example, the hydroxyl groups may react with an isocyanate monomer (MR-7A^{®}: *m*-xylylene diisocyanate) in a thiourethane lens-casting monomer during lens casting to manufacture a poly(thio)urethane lens and build good adhesion to the lens surface.

Depending upon the functional group types, the oligomer or polymer may chemically react with the urethane acrylate oligomer. The oligomer or polymer may also react with the isocyanate monomer in the thio-urethane lens-casting monomer during lens casting to build good adhesion to the lens surface.

In one embodiment, the chemically reactive polymer may be polyallylmethacrylate-2-hydroxyethylmethacrylate (PAMA-co-P2HEMA). This polymer comprises many allyl group and hydroxyl groups. Although not limited in any way, it is considered that the allyl group in PAMA-co-P2HEMA can first react with the urethane acrylate oligomer in the primer coating composition, and exhibits good adhesion on the TAC film surface. The hydroxy (-OH) group, which does not react during the UV cure, may remain available to react with a lens-casting monomer during lens casting. For example, the hydroxyl group may react with an isocyanate monomer (MR-7A^{®}: *m*-xylylene diisocyanate) in a thiourethane lens-casting monomer during lens casting to manufacture a poly(thio)urethane lens and build good adhesion to the lens surface.

The primer coating composition includes a UV initiator, a thermal initiator, or both. The UV initiator and the thermal initiator are not limited, as long as they are capable of initiate polymerization of at least one of the acrylic polymer, the urethane acrylate oligomer, and the reactive component described above. The primer coating composition including the UV initiator may be cured with UV irradiation prior to lens casting. The primer coating composition including the thermal initiator may be thermo-cured prior to lens casting.

The UV initiator may be any UV initiator that may be suitably used for manufacturing ophthalmic lenses, in particular sunglass lenses. Preferably, the UV initiator is capable of initiating polymerization of the acrylic polymer, the urethane acrylate oligomer, or both.

The thermal initiator may be any thermal initiator that may be suitably used for manufacturing ophthalmic lenses, in particular sunglass lenses. Preferably, the thermal initiator is capable of initiating polymerization of the acrylic polymer, the urethane acrylate oligomer, or both.

The solvent may be used to dissolve or disperse the acrylic polymer, the urethane acrylate oligomer, the reactive component, and the UV initiator or the thermal initiator. Examples of the solvents include, but are not limited to, acetone, methyl ethyl ketone (MEK), methylisobutyl ketone (MIBK), ethyl acetate (EtAc), cyclopentanone, cyclohexanone, and combinations thereof. In one embodiment, the solvent includes a ketone solvent, an acetate solvent, or both.

The amount of the solvent in the primer coating composition is not limited. When present, the solvent may be included in an amount ranging from 60 wt.% to 99 wt.%.

The primer coating composition may be obtained by adding the reactive component to a base primer formulation. The base primer formulation may include the acrylic polymer, the urethane acrylate oligomer, the UV initiator, the solvent, or any combinations thereof. The base primer formulation may be a composition used to improve adhesive force between a CR-39 lens and a TAC film. The base primer formulation may be a commercially available product, such as OPTOCLEAR^{®} 5002 manufactured by Onbitt Inc. In one embodiment, the primer coating composition may be obtained by adding the reactive component and the solvent to OPTOCLEAR^{®} 5002. The base primer formulation may also be any formulation described in KR993596B1.

For example, the primer coating composition may be obtained by adding the reactive component to a base primer formulation so that the primer coating composition includes 30% by mass to 55% by mass, preferably 35% by mass to 50% by mass, more preferably 40% by mass to 45% by mass of the base primer formulation, and that the primer coating composition includes 1% by mass to 30% by mass, preferably 3% by mass to 25% by mass, more preferably 5% by mass to 15% by mass, of the reactive component. The solvent added to the base primer formulation may amount to 15% by mass to 69% by mass, preferably 30% by mass to 65% by mass, more preferably 45% by mass to 55% by mass in the obtained primer coating composition.

The primer coating composition may additionally include further components or additives such as dyes for color adjustment or light filter that may be suitably used in manufacturing an ophthalmic lens, a prescription lens, and more specifically a prescription sunglass lens.

The primer coating composition is curable, and may be cured upon irradiation of UV light or exposure to heat. In one embodiment, the primer coating is UV curable.

The primer coating composition, when applied onto a functional laminate, may provide excellent adhesion between the functional laminate and a casted lens. The primer coating composition may be used to manufacture a UHI poly(thio)urethane lens having a TAC film or a TAC laminate with excellent adhesion between the TAC and poly(thio)urethane lens interface. The functional laminate may be attached on at least one external surface of the casted lens, or may be embedded in the casted lens. Preferably, the primer coating composition is used to manufacture a TAC-on-Top casting lens having a TAC film or a TAC laminate positioned on top of a cast UHI poly(thio)urethane lens. The primer composition may provide desirable, commercially acceptable level of adhesiveness between the TAC and poly(thio)urethane lens interface and low haze

A second embodiment is related to a method for cast-polymerizing a lens using the primer coating composition described above. The method includes: applying the primer coating composition to at least one external surface of a functional laminate; cutting and forming the functional laminate, placing the curved functional laminate to which the primer coating composition is applied and a lens-casting monomer in a casting cell such that the lens-casting monomer contacts the primer coated side of the functional laminate; and cast polymerizing the lens-casting monomer in the casting cell.

Any functional laminate described above may be used in the present embodiment. Preferably, the functional laminate includes a TAC film. The functional laminate may have a TAC film on its outer surface(s). In one embodiment, the functional laminate is a TAC-PVA-TAC laminate including a PVA polarizing film sandwiched between TAC films.

The primer coating composition may be applied to any one surface of the functional laminate, or to both surfaces of the functional laminate. Preferably, the primer coating composition is applied to one main surface of the functional laminate.

The primer coating composition may be applied to the functional laminate by any method, including, but not limited to, spraying or roll coating. The primer coating composition may optionally be air-dried or air oven dried and may be cured with UV irradiation or exposure to heat. Preferably, the primer coating composition is air oven dried and then cured with UV irradiation prior to the next step.

The cured degree of the primer coating composition is not limited. For example, the primer coating composition may be considered to be sufficiently cured when the primer coating composition does not move on the surface of the functional laminate in a casting cell for casting a lens described below. Additionally, the primer coating composition may be considered to be sufficiently cured when the primer coating composition does not appear to be wet.

A protective film layer may be applied onto the dried primer coated functional laminate to preserve surface quality integrity. In a roll-to-roll processes, the rolled up roll with a protective film layer attached, can be safely stored.

After application of the primer coating composition, the functional laminate may be formed into a desired shape before a liner applied to protect the primer surface. For example, the functional laminate may be curved to fit into a casting cell for casting a lens, or cut into a suitable shape or size. Preferably, the functional laminate is formed into a desired shape after the primer coating composition is sufficiently cured by UV or heat.

The functional laminate to which the primer coating composition is applied is then placed in a casting cell for casting a lens along with a lens-casting monomer. Any lens-casting monomer described above may be used. In one embodiment, the lens-casting monomer includes at least one urethane monomer. Preferably, the lens-casting monomer includes at least one thiourethane lens-casting monomer, such as MR-7^{®}. A lens is formed by cast-polymerization of the lens-casting monomer. The functional laminate and the lens-casting monomer may be placed in the casting cell so that a lens is formed on one surface of the functional laminate. The functional laminate and the lens-casting monomer may also be placed in the casting cell so that the functional laminate is embedded in the lens. Preferably, the functional laminate and the lens-casting monomer are placed in the casting cell so that a lens is formed on the functional laminate side to which the primer coating composition is applied.

Any casting cell suitable for casting a lens may be used. Also, casting conditions are not limited as long as a lens is properly formed from the lens-casting monomer in the casting cell.

After a lens is formed, the lens is removed from the casting cell, and optionally subjected to suitable treatments, such as prescription surfacing, hard coating and anti-reflective coating treatments.

A third embodiment is related to a lens obtained by using the primer coating composition described above. The invention is defined by the claims.

In one aspect of the present embodiment, the lens is cast-polymerized and has a functional laminate on one surface or on two surfaces of the lens. The cast-polymerized lens may also have a functional layer embedded in the lens.

The functional laminate may be attached to the lens via a primer coating formed by curing the primer coating composition described above. The primer coating may have a thickness ranging from about 0.5 µm to about 30 µm.

The functional laminate may have polarization properties and include a polarizing PVA layer and a TAC layer. The functional laminate may have a structure of TAC-PVA-TAC laminate.

The lens may be a poly(thio)urethane lens, in particular a poly(thio)urethane lens obtained by polymerizing a lens-casting monomer including MR-7^{®}.

In one exemplary embodiment, the lens is an ophthalmic lens, in particular a lens suitably used for sunglasses. The lens may be a polarized lens.

A fourth embodiment is related to eyeglasses having the cast-polymerized lens described above. The eyeglasses may be sunglasses. The invention is defined by the claims.

A fifth embodiment is related to a method for modifying a base primer formulation to improve the adhesion force between a functional layer and a lens by including the reactive component described above in the base primer formulation. The functional layer may be a TAC-PVA-TAC polarizing laminate, and the lens may be a poly(thio)urethane lens. The invention is defined by the claims.

A sixth embodiment is related to a method for manufacturing a functional laminate using the primer coating composition described above. In the present embodiment, the primer coating composition may be used to adhere each layer in the functional laminate. The primer coating composition may be used along with another adhesive composition, such as polyurethane (PU) adhesive. The PU adhesive may be a two-composition (2K) adhesive. The invention is defined by the claims.

The functional laminate may include at least one functional layer and at least one thermoplastic, non-functional layer for supporting the functional layers. The functional layer may be a layer having certain functionalities or properties, such as a polarizing film and a photochromic film, for example a polyvinyl alcohol (PVA) polarizing film. The thermoplastic, non-functional layer may be made of, for example, polycarbonate (PC), polymethyl methacrylate (PMMA), polyamide (nylon), polyester (PET), cellulose acetate butyrate (CAB), triacetyl cellulose (TAC), and combinations thereof.

In one aspect of the present embodiment, the primer coating composition may be used in manufacturing a TAC laminate such as a TAC-X-TAC laminate in combination with an adhesive. The primer coating composition may be applied onto the internal TAC surfaces to provide better adhesion to X. X may be a functional layer, such as but not limited to polarizing, photochromic and clear to polarizing layer, for example. The primer coating composition may improve adhesion between the layers in the laminate when they are adhered with a two-composition (2K) polyurethane (PU) adhesive.

For example, to manufacture a functional laminate including a TAC thermoplastic film and a functional film, the primer coating composition may be applied to one or both surface of a TAC film and/or a functional film, and the applied primer coating composition may be dried and cured. A 2K PU adhesive composition may be applied between a primer coated TAC film and/or a functional film where the 2K PU adhesive contacts the primer composition side of the TAC film and/or a functional film, so they may be adhered to each other. Although not limited in any way, it is considered that the primer coating composition, or the primer coating obtained by curing the primer coating composition, improves adhesiveness of the 2K PU adhesive composition to a TAC film and/or a functional film.

### EXAMPLES

The following examples are illustrative and do not limit in any way the present embodiments.

OPTOCLEAR^{®} 5002 (OC-5002, Onbitt Inc. (Korea), is a commercially available polyurethane primer coating composition for TAC film. In some examples, this was used as a base primer where additional components were added to demonstrate the novelty of the innovation.

### Manufacturing a TAC-on-TOP Polarizing Ophthalimc lens

Ophthalmic polarizing lenses were made by applying a primer formulation onto a TAC polarizing laminate. The TAC polarizing laminate film used in the examples was made by Onbitt Inc. (Korea), having a structure of TAC-PVA-TAC. The primer-coated TAC laminate was thermally formed to a 4.0 diopters base (4-base) curvature using a thermoforming equipment manufactured by LEMA. The formed TAC laminate was then placed into a TAC-on-TOP lens casting cell, consisting of a front and a rear polished mold separated by a gasket. The casting cell was then filled with a MR7^{®} (Mitsui Chemical) thiourethane lens-casting monomer and was thermally cured to a hard resin. After curing and disassembly, a polarizing MR-7^{®} semi-finished (SF) lens (UHI) was obtained where the TAC polarizer is positioned on the front surface of the SF lens. A SF lens is a lens where at least one surface is an optical surface. The optical surface is typically the front or convex surface of the SF lens.

### Peel Force Testing

A razor-cutting tool was used to cut a 1-inch strip across the central region of the lens, from lens edge to edge. The lens was soaked in water for at least 24 hours and the edge was manually peeled back to expose a leader section of the strip beginning at one edge. The lens was further soaked for another 10 minutes immediately prior to testing. The leader was clamped into a Mark 10 and the 90° Peel Force was measured by pulling at 1.5 mm/minute.

### Example 1

A primer formulation was prepared by placing 45wt% Optoclear 5002 (Onbitt), 5wt% 2-HEMA (Sigma-Aldrich) and 50wt% ethyl acetate into a container and mixed well. The primer coating composition was applied onto TAC laminate using a drawdown board with Meyer Rod #3.5 at the coating speed of about 105 mm/second. The coating was dried for 2 minutes at 60°C and then UV cured using a Xenon lamp with 20 seconds exposure.

### Example 2

A primer formulation was prepared as in example 1 except using 40wt% Optoclear 5002 (Onbitt) and 10wt% 2-HEMA (Sigma-Aldrich).

### Example 3

A primer formulation was prepared as in example 1 except replacing 2-HEMA by 5wt% PETMP (Sigma-Aldrich).

### Example 4

A primer formulation was prepared as in example 2 except replacing 2-HEMA by 10wt% PETMP (Sigma-Aldrich).

### Comparative Example 1

A primer formulation Optoclear 5002 (Onbitt) was applied onto TAC laminate using a drawdown board with Meyer Rod #3.5 at the coating speed of about 105 mm/second. The coating was dried for 2 minutes at 60°C and then UV cured using a Xenon lamp with 20 seconds exposure.

### Comparative Example 2

A primer formulation was prepared by placing 33wt% Optoclear 5002 (Onbitt), 2wt% CR39 (PPG) and 65wt% ethyl acetate into a container and mixed well. The primer coating composition was applied onto TAC laminate in a roll-to-roll application using a slot die coater. The coated TAC laminate wasdried and then UV cured. The dried primer coating is about 2µm in thickness.

### Comparative Example 3

A primer formulation was prepared similar to Comparative Example 2 except that using 45wt% Optoclear 5002, 5wt% SR-444 (Sartomer) and 50wt% ethyl acetate. The dried primer coating is about 2µm in thickness.

The results in Table 1 demonstrate the utility of the invention based upon Examples 1-4. It has been demonstrated that a primer formulation made by the addition of 5-10% HEMA, and the addition of 5-10% PETMP with the addition of 50% EtAc to Optoclear 5002, successfully secured a TAC polar laminate to the front surface of a poly(thio)urethane lens with a peel force of >20N/in. Additionally, the adhesion of the TAC polar laminate was sufficiently strong to enable typical post ophthalmic lens processing such as surfacing, edging and hard coating with no issues observed. This invention is desirable in order to manufacture a polarizing ophthalmic lens.

In contrast, Comparative Example 1, Optoclear 5002 neat, doesn't provide the desired adhesion (<3N/in) to manufacture a TAC-on-TOP polarized ophthalmic lens. After surfacing, delamination was observed. Similarly, poor results were seen for Comparative Examples 2 and 3where CR39 and SR444 were added to manufacture a TAC-on-TOP polarized ophthalmic lens. After surfacing, delamination was observed.

**Table 1**

| | Base formulation | Added components | Primer application | Curing conditions | Adhesion after casting | Adhesion after surfacing and hardcoating |
|---|---|---|---|---|---|---|
| Example 1 | OC-5002 | 5% HEMA | Meyer rod coating/ #3.5 | Dry @60°C/2 mill, then UV cure @Xenon /20s | Strong (peel force >20N/in) | Good |
| | 45% | 50% EtAc | | | | |
| Example 2 | OC-5002 | 10% HEMA | Meyer rod coating/ #3.5 | Dry @60°C/2 mill, then UV cure @Xenon /20s | Strong (peel force >20N/in) | Good |
| | 40% | 50% EtAc | | | | |
| Example 3 | OC-5002 | 5% PETMP | Meyer rod coating/ #3.5 | Dry @60°C/2 mill, then UV cure @Xenon /20s | Strong (peel force >20N/in) | Good |
| | 45% | 50% EtAc | | | | |
| Example 4 | OC-5002 | 10% PETMP | Meyer rod coating/ #3.5 | Dry @60°C/2 mill, then UV cure @Xenon /20s | Strong (peel force >20N/in) | Good |
| | 40% | 50% EtAc | | | | |
| Comparative Example 1 | OC-5002 100% | None | Meyer rod coating/ #3.5 | Dry @60°C/2 min, then UV cure @Xenon /20s | Poor (peel force <3N/in) | Delaminated |
| Comparative Example 2 | OC-5002 | 2% CR-39 | Slot die coated | Dried and cured under similar proprietary conditions | Poor (peel force <3N/in) | Delaminated |
| | 33% | 65% EtAc | | | | |
| Comparative Example 3 | OC-5002 | 5% SR-444 | Slot die coated | Dried and cured under similar proprietary conditions | Poor (peel force <3N/in) | Delaminated |
| | 45% | 50% EtAc | | | | |

| | | | | | | |
|---|---|---|---|---|---|---|
| Note: OC-5002: Polyurethane acrylate UV curable primer for TAC (Onbitt) HEMA: 2-Hydroxyethyl methacrylate monomer (Sigma-Aldrich) SR-444: Pentaerythritol triacrylate monomer (Sartomer) PETMP: Pentaerythritol tetrakis(3-mercaptopropionate) monomer (TCI) CR-39: Allyl diglycol carbonate monomer (PPG) EtAc: Ethyl acetate solvent (Acros) | | | | | | |

## Claims

1. A functionalized optical article, comprising:
an optical lens including at least one polymerized monomer formulation;
a functional laminate including a functional film and at least one thermoplastic film layer attached to at least one side of the functional film; and
a primer coating deposited on at least one external surface of the functional laminate,
said primer coating including, prior to curing:
at least one acrylic polymer,
at least one urethane acrylate oligomer,
at least one reactive component,
at least one UV initiator, and
at least one solvent,
**characterized in that**
the reactive component comprises at least one selected from the group consisting of: 2-hydroxyethylmethacrylate (HEMA), allyl methacrylate (AMA), 2-hydroxy-1,3-di(meth)acryloxy propane, 2-hydroxypropylmethacrylate (HPMA), dimethylaminoethylmethacrylate (DMAEM), diethylaminoethylmethacrylate (DEAEM),pentaerythritol tetrakis(3-mercaptopropionate), 2,3-bis[(2-mercaptoethyl)thio]-1-propanethiol, 2-mercaptoethyl sulfide, poly(ethylene glycol) dithiol, 2,2'-(Ethylenedioxy)diethanethiol, ethylene glycol bis-mercaptoacetate, pentaerythritol,

2. The functionalized optical article of claim 1, wherein the acrylic polymer has a molecular weight ranging from about 1,000 to about 100,000 g/mol.

3. The functionalized optical article of claim 1, wherein the urethane acrylate oligomer comprises an ethylenically unsaturated monomer having a degree of unsaturation of 1 or more.

4. The functionalized optical article of claim 1, wherein the reactive component has at least one functional group selected from the group consisting of: allyl, vinyl, (meth)acrylate, thiol, hydroxyl, isocyanate, epoxy, episulfide, amine, and imine, or the reactive component has a (meth)acrylate group and at least one functional group selected from the group consisting of:
allyl, vinyl, thiol, hydroxyl, isocyanate, epoxy, episulfide, amine, and imine.

5. The functionalized optical article of claim 1, wherein the reactive component is included in the primer coating, prior to curing, in an amount of 1% by mass to 30% by mass.

6. The functionalized optical article of claim 1, wherein the reactive component is 2-hydroxyethylmethacrylate and pentaerythritol tetrakis(3-mercaptopropionate).

7. The functionalized optical article of claim 1, wherein the solvent comprises at least one selected from the group consisting of a ketone solvent and an acetate solvent.

8. The functionalized optical article of claim 1, wherein the functional laminate comprises a functional layer and a thermoplastic film layer, where the thermoplastic film layer comprises at least one selected from the group consisting of polycarbonate (PC), polymethyl methacrylate (PMMA), polyamide (nylon), polyester (PET), cellulose acetate butyrate (CAB), and triacetyl cellulose (TAC).

9. The functionalized optical article of claim 1, wherein the functional film layer comprises PVA polarizing film and photochromic film.

10. The functionalized optical article of claim 1, wherein the functional laminate is a TAC laminate with dried primer coating on at least one external surface.

11. The functionalized optical article of claim 1, wherein the primer coating on the functional laminate is dried and has a thickness ranging from about 0.5 µm to about 30 µm.

12. The functionalized optical article of claim 1, wherein the ophthalmic lens includes at least one polymer, and
wherein the polymer includes a urethane or thiourethane polymer.

13. The functionalized optical article of claim 1, wherein the functional laminate is positioned on a surface of the optical article or resides embedded within the optical article.

## Patentansprüche

1. Funktionalisierter optischer Artikel, umfassend:
eine optische Linse, die mindestens eine polymerisierte Monomerformulierung einschließt;
ein funktionelles Laminat, das einen funktionellen Film und mindestens eine thermoplastische Filmschicht, die an mindestens einer Seite des funktionellen Films befestigt ist, einschließt; und
eine Grundierbeschichtung, die auf mindestens einer Außenoberfläche des funktionellen Laminats abgesetzt ist, wobei die Grundierbeschichtung vor dem Härten einschließt:
mindestens ein Acrylpolymer,
mindestens ein Urethanacrylatoligomer,
mindestens eine reaktive Komponente,
mindestens einen UV-Initiator, und
mindestens ein Lösungsmittel,
**dadurch gekennzeichnet, dass** die reaktive Komponente mindestens eines ausgewählt aus der Gruppe bestehend aus 2-Hydroxyethylmethacrylat (HEMA), Allylmethacrylat (AMA), 2-Hydroxy-1,3-di(meth)-acryloxypropan, 2-Hydroxypropylmethacrylat (HPMA), Dimethylaminoethylmethacrylat (DMAEM), Diethylaminoethylmethacrylat (DEAEM), Pentaerythritoltetrakis(3-mercaptopropionat), 2,3-Bis[(2-mercaptoethyl)thio]-1-propanthiol, 2-Mercaptoethylsulfid, Poly(ethylenglykol)dithiol, 2,2'-(Ethylendioxy)diethanthiol, Ethylenglykolbismercaptoacetat, Pentaerythritol umfasst.

2. Funktionalisierter optischer Artikel nach Anspruch 1, wobei das Acrylpolymer ein Molekulargewicht im Bereich von etwa 1000 bis etwa 100.000 g/mol hat.

3. Funktionalisierter optischer Artikel nach Anspruch 1, wobei das Urethanacrylatoligomer ein ethylenisch ungesättigtes Monomer mit einem Ungesättigtheitsgrad von 1 oder mehr umfasst.

4. Funktionalisierter optischer Artikel nach Anspruch 1, wobei die reaktive Komponente mindestens eine funktionelle Gruppe ausgewählt aus der Gruppe bestehend aus Allyl, Vinyl, (Meth)acrylat, Thiol, Hydroxyl, Isocyanat, Epoxy, Episulfid, Amin und Imin aufweist, oder die reaktive Komponente eine (Meth)acrylatgruppe und mindestens eine funktionelle Gruppe ausgewählt aus der Gruppe bestehend aus Allyl, Vinyl, Thiol, Hydroxyl, Isocyanat, Epoxy, Episulfid, Amin und Imin aufweist.

5. Funktionalisierter optischer Artikel nach Anspruch 1, wobei die reaktive Komponente in der Grundierbeschichtung vor dem Härten in einer Menge von 1 Massen% bis 30 Massen% eingeschlossen ist.

6. Funktionalisierter optischer Artikel nach Anspruch 1, wobei die reaktive Komponente 2-Hydroxyethylmethacrylat und Pentaerythritoltetrakis(3-mercaptopropionat) ist.

7. Funktionalisierter optischer Artikel nach Anspruch 1, wobei das Lösungsmittel mindestens eines ausgewählt aus der Gruppe bestehend aus einem Ketonlösungsmittel und einem Acetatlösungsmittel umfasst.

8. Funktionalisierter optischer Artikel nach Anspruch 1, wobei das funktionelle Laminat eine funktionelle Schicht und eine thermoplastische Filmschicht umfasst, wobei die thermoplastische Filmschicht mindestens eines ausgewählt aus der Gruppe bestehend aus Polycarbonat (PC), Polymethylmethacrylat (PMMA), Polyamid (Nylon), Polyester (PET), Celluloseacetatbutyrat (CAB) und Triacetylcellulose (TAC) umfasst.

9. Funktionalisierter optischer Artikel nach Anspruch 1, wobei die funktionelle Filmschicht PVA-Polarisationsfilm und photochromen Film umfasst.

10. Funktionalisierter optischer Artikel nach Anspruch 1, wobei das funktionelle Laminat ein TAC-Laminat mit getrockneter Grundierbeschichtung auf mindestens einer Außenoberfläche ist.

11. Funktionalisierter optischer Artikel nach Anspruch 1, wobei die Grundierbeschichtung auf dem funktionellen Laminat getrocknet ist und eine Dicke im Bereich von etwa 0,5 µm bis etwa 30 µm hat.

12. Funktionalisierter optischer Artikel nach Anspruch 1, wobei die ophthalmische Linse mindestens ein Polymer einschließt, und wobei das Polymer ein Urethan- oder Thiourethanpolymer einschließt.

13. Funktionalisierter optischer Artikel nach Anspruch 1, wobei das funktionelle Laminat auf einer Oberfläche des optischen Artikels positioniert ist oder sich innerhalb des optischen Artikels eingebettet befindet.

## Revendications

1. Article optique fonctionnalisé, comprenant :
une lentille optique incluant au moins une formule de monomère polymérisé ;
un stratifié fonctionnel incluant un film fonctionnel et au moins une couche de film thermoplastique liée à au moins un côté du film fonctionnel ; et
un revêtement de sous-couche déposé sur au moins une surface externe du stratifié fonctionnel, ledit revêtement de sous-couche incluant, avant le durcissement :
au moins un polymère acrylique,
au moins un oligomère d'uréthane-acrylate,
au moins un constituant réactif,
au moins un initiateur UV, et
au moins un solvant,
**caractérisé en ce que**
le constituant réactif comprend au moins un élément choisi dans le groupe constitué par : le 2-hydroxyéthylméthacrylate (HEMA), l'allylméthacrylate (AMA), le 2-hydroxy-1,3-di(méth)acryloxypropane, le 2-hydroxypropylméthacrylate (HPMA), le diméthylaminoéthylméthacrylate (DMAEM), le diéthylaminoéthylméthacrylate (DEAEM), le pentaérythritol tétrakis(3-mercaptopropionate), le 2,3-bis[(2-mercaptoéthyl)thio]-1-propanethiol, le 2-mercaptoéthylsulfure, le poly(éthylène glycol)dithiol, le 2,2'-(éthylènedioxy)diéthanethiol, l'éthylène glycol bis-mercaptoacétate, le pentaérythritol.

2. Article optique fonctionnalisé selon la revendication 1, dans lequel le polymère acrylique présente une masse moléculaire comprise entre environ 1000 et environ 100 000 g/mol.

3. Article optique fonctionnalisé selon la revendication 1, dans lequel l'oligomère uréthane-acrylate comprend un monomère à insaturations éthyléniques ayant un degré d'insaturation de 1 ou plus.

4. Article optique fonctionnalisé selon la revendication 1, dans lequel le constituant réactif comporte au moins un groupement fonctionnel choisi dans le groupe constitué par : l'allyle, le vinyle, le (méth)acrylate, le thiol, l'hydroxyle, l'isocyanate, l'époxy, l'épisulfure, l'amine, et l'imine, ou le constituant réactif comporte un groupement (méth)acrylate et au moins un groupement fonctionnel choisi dans le groupe constitué par : l'allyle, le vinyle, le thiol, l'hydroxyle, l'isocyanate, l'époxy, l'épisulfure, l'amine, et l'imine.

5. Article optique fonctionnalisé selon la revendication 1, dans lequel le constituant réactif est inclus dans le revêtement de sous-couche, avant le durcissement, dans une teneur de 1 % en masse à 30 % en masse.

6. Article optique fonctionnalisé selon la revendication 1, dans lequel le constituant réactif est un 2-hydroxyéthylméthacrylate et un pentaérythritol tétrakis(3-mercaptopropionate).

7. Article optique fonctionnalisé selon la revendication 1, dans lequel le solvant comprend au moins un élément choisi dans le groupe constitué par un solvant cétone et un solvant acétate.

8. Article optique fonctionnalisé selon la revendication 1, dans lequel le stratifié fonctionnel comprend une couche fonctionnelle et une couche de film thermoplastique, où la couche de film thermoplastique comprend au moins un élément choisi dans le groupe constitué par un polycarbonate (PC), un polyméthylméthacrylate (PMMA), un polyamide (nylon), un polyester (PET), un acétate-butyrate de cellulose (CAB), et une triacétylcellulose (TAC).

9. Article optique fonctionnalisé selon la revendication 1, dans lequel la couche de film fonctionnel comprend un film polarisant en PVA et un film photochromique.

10. Article optique fonctionnalisé selon la revendication 1, dans lequel le stratifié fonctionnel est un stratifié de TAC avec un revêtement de sous-couche séché sur au moins une surface externe.

11. Article optique fonctionnalisé selon la revendication 1, dans lequel le revêtement de sous-couche sur le stratifié fonctionnel est séché et a une épaisseur comprise entre environ 0,5 µm et environ 30 µm.

12. Article optique fonctionnalisé selon la revendication 1, dans lequel la lentille ophtalmique inclut au moins un polymère, et
dans lequel le polymère inclut un polymère uréthane ou thiouréthane.

13. Article optique fonctionnalisé selon la revendication 1, dans lequel le stratifié fonctionnel est positionné sur une surface de l'article optique ou réside intégré à l'intérieur de l'article optique.
